# EUROPEAN PATENT APPLICATION

(11) **EP 4 843 845 A1**
(43) Date of publication of application: **25.11.2026**
(21) Application number: 25178336.1
(22) Date of filing: 22.05.2025
(51) Int. Cl.: B60T 13/72, B60T 17/22, F04B 49/00

(54) **VACUUM PUMP SYSTEM AND CONTROL METHOD THEREOF**

(71) Applicant: ZHEJIANG VIE ZHIQU AUTOMOBILE ELECTRONICS TECHNOLOGY CO., LTD., Zhuji City, Shaoxing City Zhejiang 311835 (CN); ZHEJIANG VIE SCIENCE & TECHNOLOGY CO., LTD., Zhuji City Zhejiang 311835 (CN)
(72) Inventor: WU, Bifeng, Zhuji City, Shaoxing City 311835 (CN); XU, Chong, Zhuji City, Shaoxing City 311835 (CN); SI, Chenfeng, Zhuji City, Shaoxing City 311835 (CN); WANG, Yuying, Zhuji City, Shaoxing City 311835 (CN); XU, Jieli, Zhuji City, Shaoxing City 311835 (CN); YANG, Ji, Zhuji City, Shaoxing City 311835 (CN); TIAN, Lubo, Zhuji City, Shaoxing City 311835 (CN); LIU, Shiming, Zhuji City, Shaoxing City 311835 (CN)
(74) Representative: Cabinet Chaillot

(57) **Abstract**

The present invention provides a vacuum pump system and a control method thereof, wherein a relative pressure sensor detects a real-time pressure difference between internal and external pressures of the vacuum pump. After the vacuum pump is activated, it is determined whether the real-time pressure difference of the vacuum pump reaches a first activation pressure difference threshold within a first preset operating duration: if not, a warning signal for low vacuum fault warning is generated and the vacuum pump is controlled to enter fault mode; if yes, the vacuum pump is controlled to operate in a plain mode. In the plain mode, it is determined whether plateau mode switching conditions are met based on the real-time pressure difference: if yes, the vacuum pump switches to the plateau mode. In the plateau mode, it is determined whether plain mode switching conditions are met based on the real-time pressure difference: if yes, the vacuum pump switches to the plain mode. This solution adapts to varying altitude conditions, effectively reducing brake failure risks in high-altitude environments.

## Description

### BACKGROUND OF THE INVENTION

### 1. Field of the Invention

The present invention relates to the technical field of vacuum pump system control, in particular to a vacuum pump system and a control method thereof.

### 2. Description of the Related Art

The vacuum pump is a critical component for providing vacuum pressure to vehicle brake systems. The maximum achievable vacuum level of the vacuum pump varies with ambient pressure. To meet different vacuum pressure requirements in plain region and plateau region, the activation threshold and deactivation threshold of the vacuum pump in the control method of the vacuum pump system must be adjusted.

In the absence of an external atmospheric pressure sensor, in the prior art there is provided a single relative pressure sensor to control the operation of the vacuum pump by detecting the pressure difference between the pressure within the vacuum system and the ambient pressure. This technique generally functions without issue in plain regions, but in plateau areas, an excessively low deactivation threshold (i.e., an overly high vacuum level) may cause prolonged operation of the vacuum pump, leading to vehicle alarm triggers, reduced service life of the vacuum pump, or even brake failure. Additionally, in the prior art the detection for vacuum line leaks is lacked, which may result in extended vacuum pump operation, thereby shortening its lifespan and degrading brake assist performance.

### SUMMARY OF THE INVENTION

Based on the foregoing, the present invention provides a vacuum pump system and a control method thereof, aiming to resolve the technical problem in the prior art where brake systems using a single relative pressure sensor pose a risk of brake failure in plateau regions.

A control method for a vacuum pump system, wherein the vacuum pump system is provided with a relative pressure sensor for detecting a real-time pressure difference between internal pressure of the vacuum pump system and external ambient pressure, comprising:
step A1: activating the vacuum pump to enter normal operation mode, and detecting whether the real-time pressure difference of the vacuum pump reaches a first activation pressure difference threshold within a first preset operating duration:
   if not, proceed to step A2; if yes, proceed to step A3;
step A2: generating a warning signal for low vacuum fault and controlling the vacuum pump to enter fault mode;
step A3: controlling the vacuum pump to operate in a plain mode;
step A4: in the plain mode, determining whether plateau mode switching conditions are met based on the real-time pressure difference:
   if not, continue step A3; if yes, proceed to step A5;
step A5: controlling the vacuum pump to operate in a plateau mode;
step A6: in the plateau mode, determining whether plain mode switching conditions are met based on the real-time pressure difference:
   if not, continue step A5; if yes, proceed to step A3;
   wherein, in the plain mode, the vacuum pump is set with a first activation pressure difference threshold and a first deactivation pressure difference threshold, and in the plateau mode, the vacuum pump is set with a second activation pressure difference threshold and a second deactivation pressure difference threshold, wherein the first activation pressure difference threshold is lower than the second activation pressure difference threshold.

Further, preferably, step A4 comprises:
step A41: determining whether the vacuum pump causes the real-time pressure difference to reach the first deactivation pressure difference threshold from the first activation pressure difference threshold within a second preset operating duration:
   if yes, continue step A3; if not, proceed to step A42;
step A42: starting from the moment when the real-time pressure difference is at the first activation pressure difference threshold, controlling the vacuum pump to operate for the second preset operating duration and then stop, thereafter proceeding to step A43;
step A43: after the vacuum pump stops, determining whether the real-time pressure difference obtained within a first preset detection method is greater than the first activation pressure difference threshold:
   if the real-time pressure difference is not greater than the first activation pressure difference threshold, proceed to step A5;
   if the real-time pressure difference is greater than the first activation pressure difference threshold, proceed to step A44;
step A44: controlling the vacuum pump to start operating and, after the vacuum pump operates for a third preset operating duration, controlling the vacuum pump to stop, thereafter proceeding to step A45;
step A45: after the vacuum pump stops, determining whether the real-time pressure difference obtained within a second preset detection method is greater than the first activation pressure difference threshold:
   if the real-time pressure difference is greater than the first activation pressure difference threshold, proceed to step A2;
   if the real-time pressure difference is not greater than the first activation pressure difference threshold, proceed to step A3.

Further, preferably, step A6 comprises:
step A61: determining whether the vacuum pump causes the real-time pressure difference to reach the second deactivation pressure difference threshold from the second activation pressure difference threshold within a fourth preset operating duration:
   if yes, proceed to step A62; if not, proceed to step A63;
step A62: determining whether the actual operating duration of the vacuum pump for the real-time pressure difference to reach the second deactivation pressure difference threshold from the second activation pressure difference threshold is less than a fifth preset operating duration:
   if yes, proceed to step A3; if not, proceed to step A5;
step A63: starting from the moment when the real-time pressure difference is at the second activation pressure difference threshold, controlling the vacuum pump to operate for the fourth preset operating duration and then stop, thereafter proceeding to step A64;
step A64: after the vacuum pump stops, determining whether the real-time pressure difference obtained within a third preset detection method is greater than the second activation pressure difference threshold:
   if the real-time pressure difference is not greater than the second activation pressure difference threshold, proceed to step A5;
   if the real-time pressure difference is greater than the second activation pressure difference threshold, proceed to step A65;
step A65: controlling the vacuum pump to start operating and, after operating for a sixth preset operating duration, controlling the vacuum pump to stop, thereafter proceeding to step A66;
step A66: after the vacuum pump stops, determining whether the real-time pressure difference obtained within a fourth preset detection method is greater than the second activation pressure difference threshold:
   if the real-time pressure difference is greater than the second activation pressure difference threshold, proceed to step A2;
   if the real-time pressure difference is not greater than the second activation pressure difference threshold, proceed to step A5.

Further, preferably, in step A62, when the actual operating duration of the vacuum pump for the real-time pressure difference to reach the second deactivation pressure difference threshold from the second activation pressure difference threshold is not less than the fifth preset operating duration, detecting whether a vacuum leakage fault exists in the vacuum pump system at first:
if not, continue step A5; if yes, generate a warning signal for the vacuum leakage fault and continue step A5.

Further, preferably, in step A3, after the vacuum pump enters the plain mode, detecting whether the vacuum pump exhibits abnormalities, and upon detecting abnormalities, generating a warning signal for the vacuum pump failure and controlling the vacuum pump to enter fault mode; and/or
in step A5, after the vacuum pump enters the plateau mode, detecting whether the vacuum pump exhibits abnormalities, and upon detecting abnormalities, generating a warning signal for the vacuum pump failure and controlling the vacuum pump to enter fault mode.

Further, preferably, in step A3, after the vacuum pump enters the plain mode, detecting whether the relative pressure sensor exhibits abnormalities, and upon detecting abnormalities, generating a warning signal for the relative pressure sensor failure and controlling the vacuum pump to enter fault mode; and/or
in step A5, after the vacuum pump enters the plateau mode, detecting whether the relative pressure sensor exhibits abnormalities, and upon detecting abnormalities, generating a warning signal for the relative pressure sensor failure and controlling the vacuum pump to enter fault mode.

Further, preferably, in the fault mode, the vacuum pump is forced to perform a predetermined number of operating cycles, each operating cycle operates for a seventh preset duration followed by a first preset shutdown duration, if the corresponding fault is eliminated within the predetermined number of operating cycles, the vacuum pump returns to the normal operation mode of step A1; otherwise, the vacuum pump is deactivated.

Further, preferably, in step A41, when determining that the vacuum pump causes the real-time pressure difference to reach the first deactivation pressure difference threshold from the first activation pressure difference threshold within the second preset operating duration, detecting whether a vacuum leakage fault exists in the vacuum pump system at first:
if not, continue step A3; if yes, generate a warning signal for the vacuum leakage fault and continue step A3.

Further, preferably, in step A64, when determining that the real-time pressure difference is not greater than the second activation pressure difference threshold, detecting whether a vacuum leakage fault exists in the vacuum pump system at first:
if not, continue step A5; if yes, generate a warning signal for the vacuum leakage fault and continue step A5.

The present invention further provides vacuum pump system for implementing the above mentioned control method of a vacuum pump system, comprising:
a relative pressure sensor configured to detect a real-time pressure difference between internal pressure of the vacuum pump system and external ambient pressure;
a control module connected to both the relative pressure sensor and the vacuum pump, the control module is configured to:
   after activating the vacuum pump, detect whether the real-time pressure difference of the vacuum pump reaches a first activation pressure difference threshold within a first preset operating duration, control the vacuum pump to operate in plain mode when the first activation pressure difference threshold is reached, or generate a warning signal for low vacuum fault and control the vacuum pump to enter fault mode when the first activation pressure difference threshold is not reached;
   when the vacuum pump operates in the plain mode, switch the vacuum pump to operate in plateau mode upon determining plain mode switching conditions are met based on the real-time pressure difference;
   when the vacuum pump operates in the plateau mode, switch the vacuum pump to operate in the plain mode upon determining plain mode switching conditions are met based on the real-time pressure difference;
   wherein in the plain mode, the vacuum pump is configured with a first activation pressure difference threshold and a first deactivation pressure difference threshold, while in the plateau mode, the vacuum pump is configured with a second activation pressure difference threshold and a second deactivation pressure difference threshold, the first activation pressure difference threshold is lower than the second activation pressure difference threshold.

The beneficial technical effects of the present invention are: by eliminating the external atmospheric pressure sensor and using only a relative pressure sensor, the invention achieves switching between plateau mode and plain mode for the vacuum pump through the real-time pressure difference detected by the relative pressure sensor, making it adaptable to different altitude environments. This solution addresses abnormal operation of vacuum pump systems and poor brake assist performance in plateau regions, reduces the risk of brake failure in high-altitude environments, and extends the service life of the vacuum pump.

### BRIEF DESCRIPTION OF THE DRAWINGS

Figs. 1-3 are flowcharts illustrating steps of a control method for a vacuum pump system according to the present invention;
Fig. 4 is a schematic block diagram of a vacuum pump system according to the present invention;
Figs. 5-7 are schematic diagrams showing a first structural embodiment of the vacuum pump according to the present invention;
Figs. 8-9 are schematic diagrams showing a second structural embodiment of the vacuum pump according to the present invention;
Figs. 10-11 are schematic diagrams showing a third structural embodiment of the vacuum pump according to the present invention.

### DETAILED DESCRIPTION

The technical solutions in the embodiments of the present invention will be clearly and completely described below with reference to the accompanying drawings. It is apparent that the described embodiments represent only some, rather than all, embodiments of the present invention. All other embodiments obtained by those skilled in the art based on the embodiments of the present invention without creative efforts shall fall within the protection scope of the present invention.

It should be noted that embodiments of the present invention and features therein may be combined with each other without conflict.

The present invention will be further explained below with reference to the accompanying drawings and specific embodiments, which should not be construed as limiting the scope of the invention.

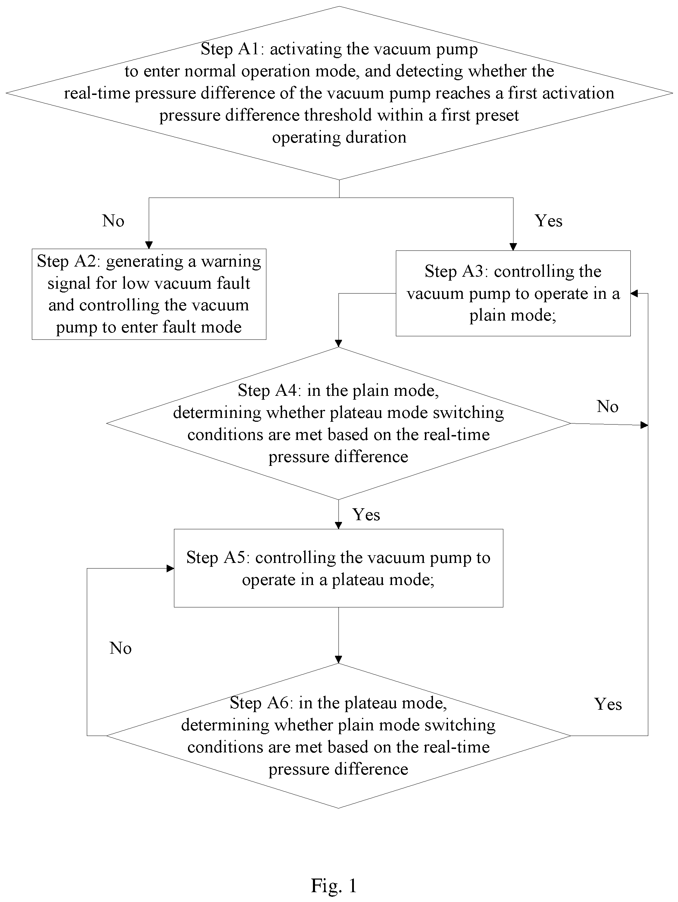

Referring to Fig. 1, the present invention provides a control method for a vacuum pump system, wherein the vacuum pump system is provided with a relative pressure sensor for detecting a real-time pressure difference between internal pressure of the vacuum pump system and external ambient pressure, comprising:
step A1: activating the vacuum pump to enter normal operation mode, and detecting whether the real-time pressure difference of the vacuum pump reaches a first activation pressure difference (P1) threshold within a first preset operating duration:
   if not, proceed to step A2; if yes, proceed to step A3;
step A2: generating a warning signal for low vacuum fault and controlling the vacuum pump to enter fault mode;
step A3: controlling the vacuum pump to operate in a plain mode;
step A4: in the plain mode, determining whether plateau mode switching conditions are met based on the real-time pressure difference:
   if not, continue step A3; if yes, proceed to step A5;
step A5: controlling the vacuum pump to operate in a plateau mode;
step A6: in the plateau mode, determining whether plain mode switching conditions are met based on the real-time pressure difference:
   if not, continue step A5; if yes, proceed to step A3;
   wherein the primary difference between the plain mode and the plateau mode lies in different activation/deactivation thresholds of the vacuum pump, the plain mode is configured with a first activation pressure difference threshold and a first deactivation pressure difference threshold, while the plateau mode is configured with a second activation pressure difference threshold and a second deactivation pressure difference threshold, the first activation pressure difference threshold being lower than the second activation pressure difference threshold.

If the vacuum pump fails to reduce the real-time pressure difference below the first activation pressure difference threshold within the first preset operating duration, it indicates insufficient vacuum level inside the vacuum pump system after the first preset operating duration, constituting a low vacuum, thereby triggering generation a warning signal for a low vacuum.

Specifically, in step A1, during system power-on initialization, power-on abnormality detection is additionally performed. If power-on abnormality is detected, a warning signal for the power-on abnormality is generated and the vacuum pump is controlled to enter fault mode.

Detecting power-on abnormality in the vacuum pump system involves monitoring whether the power supply voltage malfunctions. When the vacuum pump's supply voltage remains outside the normal operating range for a duration exceeding a predetermined threshold (e.g., more than 1 second), the system identifies a power-on abnormality in the vacuum pump system and generates a warning signal for the power-on abnormality on the vacuum pump system.

Taking a 12V power supply system as an example, in one embodiment, the normal operating voltage range for the vehicle power supply is 9V to 16V.

Specifically, in step A1, the system further detects whether the relative pressure sensor exhibits abnormalities. If sensor abnormality is detected, a warning signal for the relative pressure sensor fault is generated and the vacuum pump is controlled to enter fault mode.

If the output voltage of the relative pressure sensor exceeds its designed voltage range, or if the voltage variation of the relative pressure sensor output during one complete operating cycle (from pump activation to deactivation) is less than voltage variation threshold V1, the relative pressure sensor is determined to be abnormal (i.e., malfunctioning). The voltage variation referenced herein is an absolute value, irrespective of voltage increase or decrease.

In one embodiment, the designed output voltage range of the relative pressure sensor is 0.5V to 4.5V, with the voltage variation threshold V1 set at 0.036V.

In one embodiment, when the output voltage of the relative pressure sensor exceeds the 0.5V-4.5V range or when the voltage variation of the relative pressure sensor output during one complete pump operation cycle is less than 0.036V, the system identifies the fault type as a relative pressure sensor malfunction, specifically categorized as a pressure sensor failure.

Specifically, the real-time pressure difference is obtained by converting the output voltage of the relative pressure sensor.

Specifically, power-on abnormality detection is performed prior to relative pressure sensor abnormality detection.

Specifically, after the power-on abnormality detection and the relative pressure sensor abnormality detection are completed, when the power-on is normal and the relative pressure sensor is normal, the vacuum pump is activated.

Prior to formal activation of the vacuum pump, power-on initialization is performed to detect potential power-on abnormalities and abnormalities of the relative pressure sensor in the vacuum pump system. A fault detection is executed, to ensure subsequent normal operation of the vacuum pump based on the detected values (real-time pressure difference) from the relative pressure sensor.

If no power-on abnormality is detected and the relative pressure sensor functions normally, then in step A1, the vacuum pump initiates normal operation mode to determine whether the real-time pressure difference reaches the first activation pressure difference threshold P1 within the first preset operating duration. Failure to reach first activation pressure difference threshold P1 indicates potential low vacuum failure, classified as a low vacuum fault type. In this case, the system generates a warning signal for the low vacuum fault while simultaneously controlling the vacuum pump to enter fault mode.

The present invention eliminates the need for an external atmospheric pressure sensor by utilizing only a relative pressure sensor to monitor real-time pressure differential variations detected by the relative pressure sensor, enabling switching of the vacuum pump between plateau mode and plain mode. This technical solution adapts to varying altitude conditions, resolves operational abnormalities and poor brake assist performance in high-altitude environments, reduces brake failure risks at elevated altitudes, and extends the service life of the vacuum pump.

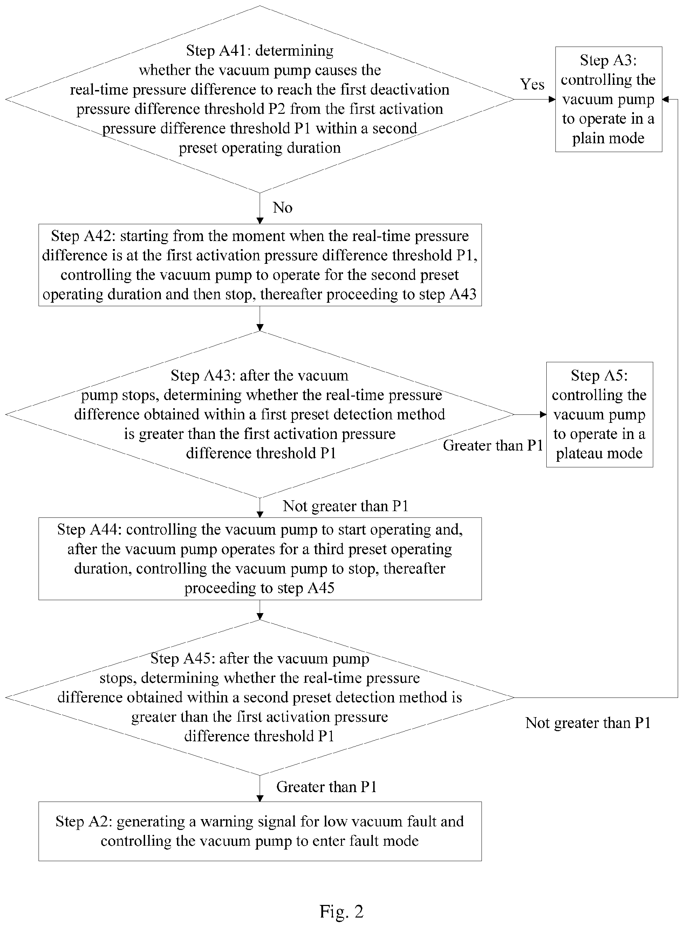

Referring to Fig. 2, further, step A4 comprises:
step A41: determining whether the vacuum pump causes the real-time pressure difference to reach the first deactivation pressure difference threshold (P2) from the first activation pressure difference threshold (P1) within a second preset operating duration:
   if yes, continue step A3; if not, proceed to step A42;
step A42: starting from the moment when the real-time pressure difference is at the first activation pressure difference threshold (P1), controlling the vacuum pump to operate for the second preset operating duration before forced stop, thereafter proceeding to step A43;
step A43: after the vacuum pump stops, determining whether the real-time pressure difference obtained within a first preset detection method is greater than the first activation pressure difference threshold (P1):
   if the real-time pressure difference is not greater than the first activation pressure difference threshold (P1), proceed to step A5;
   if the real-time pressure difference is greater than the first activation pressure difference threshold (P1), proceed to step A44;
step A44: controlling the vacuum pump to start operating and, after the vacuum pump operates for a third preset operating duration, controlling the vacuum pump to stop, thereafter proceeding to step A45;
step A45: after the vacuum pump stops, determining whether the real-time pressure difference obtained within a second preset detection method is greater than the first activation pressure difference threshold (P1):
   if the real-time pressure difference is greater than the first activation pressure difference threshold (P1), proceed to step A2;
   if the real-time pressure difference is not greater than the first activation pressure difference threshold (P1), proceed to step A3.

In step A43, if the real-time pressure difference exceeds the first deactivation pressure difference threshold (P2) but does not exceed the first activation pressure difference threshold (P1), step A5 is executed. Since reaching first deactivation pressure difference threshold (P2) indicates reaching the deactivation threshold of the vacuum pump, scenarios where the pressure difference falls below first deactivation pressure difference threshold (P2) typically do not occur.

In step A43, after the vacuum pump stops, when the real-time pressure difference obtained through the first detection method does not exceed first activation pressure difference threshold (P1), this condition satisfies the plateau mode switching conditions for switching from the plain mode to the plateau mode.

Specifically, the first preset operating duration (T1) is preferably 10s.

Specifically, the second preset operating duration equals the first preset operating duration (T1).

Specifically, the third preset operating duration equals the first preset operating duration (T1).

Specifically, in step A43, after the vacuum pump stops operating and a first stabilization duration (e.g., 2s) elapses, the first preset detection method is applied.

Specifically, in step A45, after the vacuum pump stops operating and a second stabilization duration (e.g., 2s) elapses, the second preset detection method is applied.

Specifically, in step A45, if the real-time pressure difference exceeds the first activation pressure difference threshold but remains below zero (i.e., within the 0-P1 range), step A2 is executed.

Further, in step A43, the first preset detection method comprises acquiring the real-time pressure difference at a first preset time interval, in which the number of acquiring the real-time pressure differences is not greater than a first preset count;
in step A45, the second preset detection method comprises acquiring the real-time pressure difference at a second preset time interval, in which the number of acquiring the real-time pressure differences is not greater than a second preset count.

Specifically, the first preset time interval and the second preset time interval are identical, both are 3 seconds.

Specifically, the first preset count and the second preset count are identical, both are 10 times.

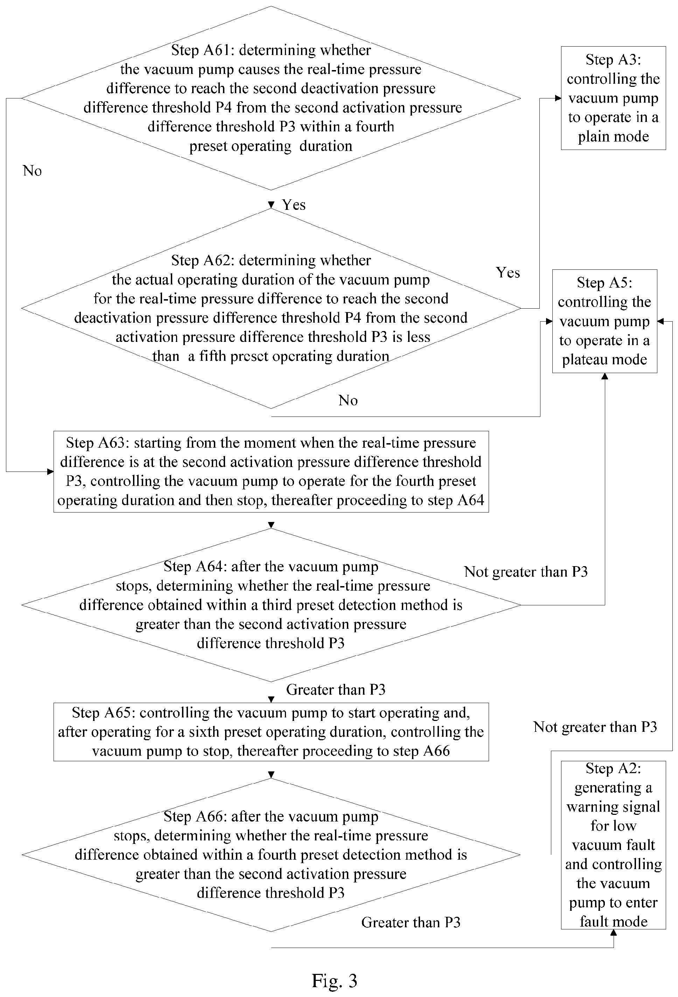

Referring to Fig. 3, step A6 further comprises:
step A61: determining whether the vacuum pump causes the real-time pressure difference to reach the second deactivation pressure difference threshold (P4) from the second activation pressure difference threshold (P3) within a fourth preset operating duration:
   if yes, proceed to step A62; if not, proceed to step A63;
step A62: determining whether the actual operating duration of the vacuum pump for the real-time pressure difference to reach the second deactivation pressure difference threshold (P4) from the second activation pressure difference threshold (P3) is less than a fifth preset operating duration:
   if yes, proceed to step A3; if not, proceed to step A5;
step A63: starting from the moment when the real-time pressure difference is at the second activation pressure difference threshold (P3), controlling the vacuum pump to operate for the fourth preset operating duration before forced stop, thereafter proceeding to step A64;
step A64: after the vacuum pump stops, determining whether the real-time pressure difference obtained within a third preset detection method is greater than the second activation pressure difference threshold (P3):
   if the real-time pressure difference is not greater than the second activation pressure difference threshold (P3), proceed to step A5;
   if the real-time pressure difference is greater than the second activation pressure difference threshold (P3), proceed to step A65;
step A65: controlling the vacuum pump to start operating and, after operating for a sixth preset operating duration, controlling the vacuum pump to stop, thereafter proceeding to step A66;
step A66: after the vacuum pump stops, determining whether the real-time pressure difference obtained within a fourth preset detection method is greater than the second activation pressure difference threshold (P3):
   if the real-time pressure difference is greater than the second activation pressure difference threshold (P3), proceed to step A2;
   if the real-time pressure difference is not greater than the second activation pressure difference threshold (P3), proceed to step A5.

The condition where the actual operating duration of the vacuum pump for the real-time pressure difference to decrease from the second activation pressure difference threshold (P3) to the second deactivation pressure difference threshold (P4) is less than the fifth preset operating duration satisfies the plain mode switching conditions for switching from the plateau mode to the plain mode.

In step A64, if the real-time pressure difference exceeds the second deactivation pressure difference threshold (P4) but does not exceed the second activation pressure difference threshold (P3), reaching the second deactivation pressure difference threshold (P4) indicates reaching the deactivation threshold of the vacuum pump, thereby typically precluding scenarios where the pressure difference falls below the second deactivation pressure difference threshold (P4).

Specifically, the fourth preset operating duration equals the first preset operating duration (T1).

Specifically, the sixth preset operating duration equals the first preset operating duration (T1).

Specifically, in step A64, after the vacuum pump stops operating and a third stabilization duration (e.g., 2s) elapses, the third preset detection method is applied.

Specifically, in step A66, after the vacuum pump stops operating and a fourth stabilization duration (e.g., 2s) elapses, the fourth preset detection method is applied.

Specifically, in step A66, if the real-time pressure difference exceeds the second activation pressure difference threshold but remains below zero (i.e., within the 0-P3 range), step A2 is executed.

Specifically, the first activation pressure difference threshold (P1) is less than the second activation pressure difference threshold (P3). Specifically, the first deactivation pressure difference threshold (P2) is less than the second deactivation pressure difference threshold (P4).

In one embodiment, in the plain mode, the parameter of the first activation pressure difference threshold (P1) is -50kPa, the parameter of the first deactivation pressure difference threshold (P2) is -70kPa;

In one embodiment, in the plateau mode, the parameter of the second activation pressure difference threshold (P3) is -30kPa, the parameter of the second deactivation threshold (P4) is -50kPa.

Further, in step A64, the third preset detection method comprises acquiring the real-time pressure difference at a third preset time interval, in which the number of acquiring the real-time pressure differences is not greater than a second preset count;
in step A66, the fourth preset detection method comprises acquiring the real-time pressure difference at a fourth preset time interval, in which the number of acquiring the real-time pressure differences is not greater than a fourth preset count.

Specifically, the third preset time interval and fourth preset time interval are identical, both are 3 seconds.

Specifically, the third preset count and fourth preset count are identical, both are 10 times.

Specifically, the first preset time interval, the second preset time interval, the third preset time interval and the fourth preset time interval are all identical.

Specifically, the first preset count, the second preset count, the third preset count and the fourth preset count are all identical.

Further, in step A62, when the actual operating duration of the vacuum pump for the real-time pressure difference to reach the second deactivation pressure difference threshold from the second activation pressure difference threshold is not less than the fifth preset operating duration (T2), detecting whether a vacuum leakage fault exists in the vacuum pump system at first:
if not, continue step A5; if yes, generate a warning signal for the vacuum leakage fault and continue step A5.

The fifth preset operating duration (T2) is configured to be less than the first operating duration (T1).

In step A62, it is primarily detected whether a moderate vacuum leakage fault exists, and if detected, generates a warning signal for the moderate vacuum leakage.

In one embodiment, when a vacuum booster, which is connected to the vacuum pump, has a 3.2L capacity, the maximum duration for the vacuum pump to reach the deactivation threshold from ambient pressure is 12s. The invention may set T1 duration as 12s, i.e., the first preset operating duration, the second preset operating duration, the third preset operating duration, the fourth preset operating duration, and the sixth preset operating duration are 12s, while setting the fifth preset operating duration (T2) as 5s.

Specifically, after the real-time pressure difference reaches the second deactivation pressure difference threshold and a fifth stabilization duration (e.g., 2s) elapses, the pressure drop value is calculated every fifth preset time interval (e.g., 3s). If the pressure drop value of the real-time pressure difference exceeds a first pressure drop threshold for consecutive fifth preset counts (e.g., 10 times), a moderate vacuum leakage fault is confirmed.

Further, in the fault mode, the vacuum pump is forced to perform a predetermined number of operating cycles, each operating cycle operates for a seventh preset duration followed by a first preset shutdown duration, if the corresponding fault is eliminated within the predetermined number of operating cycles, the vacuum pump returns to the normal operation mode of step A1; otherwise, the vacuum pump is deactivated.

Further, in step A3, after the vacuum pump enters the plain mode, detecting whether the vacuum pump exhibits abnormalities, and upon detecting abnormalities, generating a warning signal for the vacuum pump failure and controlling the vacuum pump to enter fault mode; and/or
in step A5, after the vacuum pump enters the plateau mode, detecting whether the vacuum pump exhibits abnormalities, and upon detecting abnormalities, generating a warning signal for the vacuum pump failure and controlling the vacuum pump to enter fault mode.

If the operating current of the vacuum pump exceeds the stall current I1 for a duration longer than a second predetermined period, a vacuum pump malfunction is determined (classified as a vacuum pump fault), triggering generation of a warning signal while simultaneously controlling the vacuum pump to enter fault mode.

If the operating current of the vacuum pump falls below the no-load current I2 for a duration longer than a third predetermined period, a vacuum pump malfunction is determined (classified as a vacuum pump fault), triggering generation of a warning signal while simultaneously controlling the vacuum pump to enter fault mode.

The stall current I1 is preferably 10A. The no-load current I2 is preferably 1.5A. The second predetermined period and third predetermined period are, for example, 2 seconds.

Upon entering fault mode under vacuum pump failure warning conditions, the vacuum pump is forced to perform a predetermined number of operating cycles, each comprising operation for a seventh preset duration followed by a first preset shutdown duration. If the vacuum pump's operating current returns to normal within the predetermined cycles, the warning signal is cleared and the pump resumes normal operation mode; otherwise, if the vacuum pump's operating current does not return to normal within the predetermined cycles, the vacuum pump is deactivated. The vacuum pump can be activated by power on after the vacuum pump is deactivated.

Further, in step A3, after the vacuum pump enters the plain mode, detecting whether the relative pressure sensor exhibits abnormalities, and upon detecting abnormalities, generating a warning signal for the relative pressure sensor failure and controlling the vacuum pump to enter fault mode; and/or
in step A5, after the vacuum pump enters the plateau mode, detecting whether the relative pressure sensor exhibits abnormalities, and upon detecting abnormalities, generating a warning signal for the relative pressure sensor failure and controlling the vacuum pump to enter fault mode.

The relative pressure sensor is determined to be abnormal (i.e., malfunctioning) when its output voltage exceeds the designed voltage range or if the voltage variation of the relative pressure sensor output during one complete operating cycle (from pump activation to deactivation) is less than voltage variation threshold V1.

In fault mode triggered by the warning signal for the relative pressure sensor failure, the vacuum pump is forced to complete a preset number of operating cycles, each comprising operation for a seventh preset duration followed by a first preset shutdown duration. If the removal of the relative pressure sensor failure is detected within the preset number of operating cycles, the warning signal for the relative pressure sensor failure is cleared and the vacuum pump is controlled to enter normal operation mode.

Further, in step A41, when determining that the vacuum pump causes the real-time pressure difference to reach the first deactivation pressure difference (P2) threshold from the first activation pressure difference threshold (P1) within the second preset operating duration, detecting whether a vacuum leakage fault exists in the vacuum pump system at first:
if not, continue step A3; if yes, generate a warning signal for the vacuum leakage fault and continue step A3.

In step A41, it is primarily detected whether a moderate vacuum leakage fault exists, generating a warning signal for the moderate vacuum leakage fault if confirmed.

When neither vacuum pump nor relative pressure sensor malfunctions are present, timing begins upon reaching the first activation pressure difference threshold (P1). If the first deactivation pressure difference threshold (P2) is reached within the second preset operating duration, this indicates the vacuum pump can make its vacuum degree achieve the deactivation threshold from the deactivation threshold. The system then performs a judgement for the moderate vacuum leakage: if moderate vacuum leakage exists, it generates a warning signal before entering plain mode cycling; if not, it proceeds to plain mode cycling.

Specifically, when the real-time pressure difference reaches the first deactivation pressure difference threshold and maintains for a fifth stabilization duration (e.g., 2s), the pressure drop value of the real-time pressure difference is calculated at each fifth preset time interval (e.g., 3s). If the pressure drop value of the real-time pressure difference exceeds a first pressure drop threshold (e.g., 2kPa) for consecutive fifth preset counts (e.g., 10 times), a moderate vacuum leakage fault is confirmed.

Further, in step A64, when determining that the real-time pressure difference is not greater than the second activation pressure difference threshold (P3), detecting whether a vacuum leakage fault exists in the vacuum pump system at first:
if not, continue step A5; if yes, generate a warning signal for the vacuum leakage fault and continue step A5.

In step A64, it is primarily detected whether a medium-high vacuum leakage fault exists, generating a warning signal for the medium-high vacuum leakage fault if confirmed.

Specifically, in fault mode, the vacuum pump is forced to complete a preset number of operating cycles, each comprising a seventh preset duration followed by a first preset shutdown duration. If the removal of the fault (e.g., vacuum pump malfunction or relative pressure sensor malfunction) is detected within the preset number of operating cycles, the vacuum pump enters normal operation mode; if the removal of the fault is not detected within the preset number of operating cycles, the vacuum pump is deactivated. Specifically, the seventh preset duration is 10 seconds, the first preset shutdown duration is 3 seconds.

Specifically, when the real-time pressure difference is greater than the second deactivation pressure difference threshold (P4) and is not greater than the second activation pressure difference threshold (P3), after the vacuum pump is deactivated for sixth stabilization duration (e.g., 2s), the system calculates pressure drop value of the real-time pressure difference after sixth preset interval (e.g., 3s). If the pressure drop value of the real-time pressure difference is greater than a second pressure drop threshold (e.g., 3kPa), a medium-high vacuum leakage is confirmed.

Specifically, in step A43, when determining that the real-time pressure difference is not greater than the first activation pressure difference threshold (P1), detecting whether a vacuum leakage fault exists in the vacuum pump system at first:
if not, continue step A5; if yes, generate a warning signal for the vacuum leakage fault and continue step A3.

In step A43, it is primarily detected whether a medium-high vacuum leakage fault exists, generating a warning signal for the medium-high vacuum leakage fault if confirmed.

Specifically, when the real-time pressure difference is greater than the first deactivation pressure difference threshold (P2) and is not greater than the first activation pressure difference threshold (P2), after the vacuum pump is deactivated for sixth stabilization duration (e.g., 2s), the system calculates pressure drop value of the real-time pressure difference after sixth preset interval (e.g., 3s). If the pressure drop value of the real-time pressure difference is greater than a second pressure drop threshold (e.g., 3kPa), a medium-high vacuum leakage is confirmed.

The pressure drop value of the real-time pressure difference refers to the difference between the current real-time pressure difference and the previous real-time pressure difference.

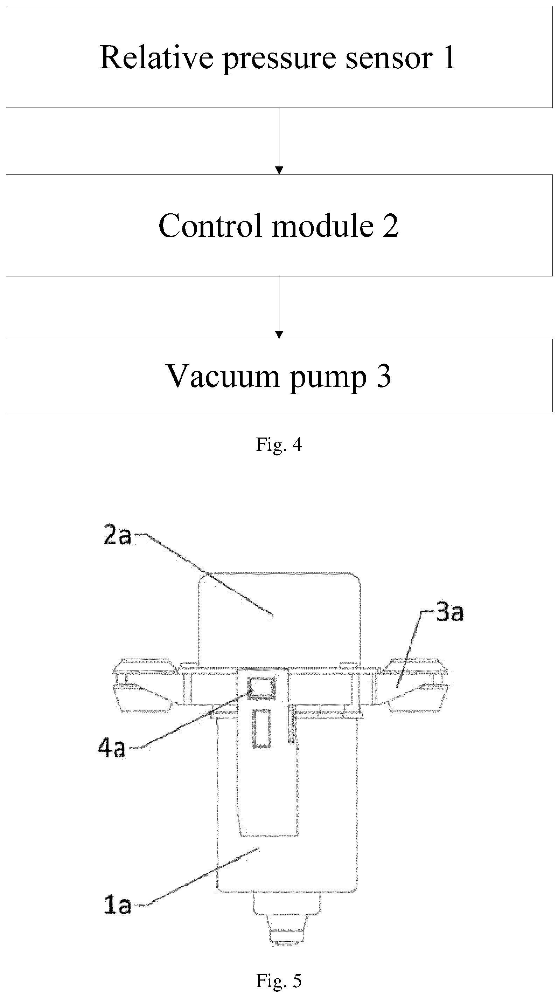

Referring to Fig. 5, the present invention further provides a vacuum pump system for implementing the above mentioned control method of a vacuum pump system, comprising:
a relative pressure sensor (1) configured to detect a real-time pressure difference between internal pressure of the vacuum pump system (3) and external ambient pressure;
a control module (2) connected to both the relative pressure sensor (1) and the vacuum pump (3), the control module is configured to:
   after activating the vacuum pump (3), detect whether the real-time pressure difference of the vacuum pump (3) reaches a first activation pressure difference threshold within a first preset operating duration, control the vacuum pump (3) to operate in plain mode when the first activation pressure difference threshold is reached, or generate a warning signal for low vacuum fault and control the vacuum pump (3) to enter fault mode when the first activation pressure difference threshold is not reached;
   when the vacuum pump (3) operates in the plain mode, switch the vacuum pump (3) to operate in plateau mode upon determining plain mode switching conditions are met based on the real-time pressure difference;
   when the vacuum pump (3) operates in the plateau mode, switch the vacuum pump (3) to operate in the plain mode upon determining plain mode switching conditions are met based on the real-time pressure difference.

The present invention eliminates the need for an external atmospheric pressure sensor by utilizing only a relative pressure sensor, combined with the operational performance of the vacuum pump and relative pressure variations within the vacuum system. Through adjustment of activation and deactivation thresholds, switching between the plateau mode and the plain mode is achieved, enabling adaptation to different environments. This solution addresses both leakage issues in vacuum pump system pipelines and operational abnormalities in plateau environments.

In the plain mode, the vacuum pump is configured with a first activation pressure difference threshold and a first deactivation pressure difference threshold, while in the plateau mode, the vacuum pump is configured with a second activation pressure difference threshold and a second deactivation pressure difference threshold, the first activation pressure difference threshold is lower than the second activation pressure difference threshold.

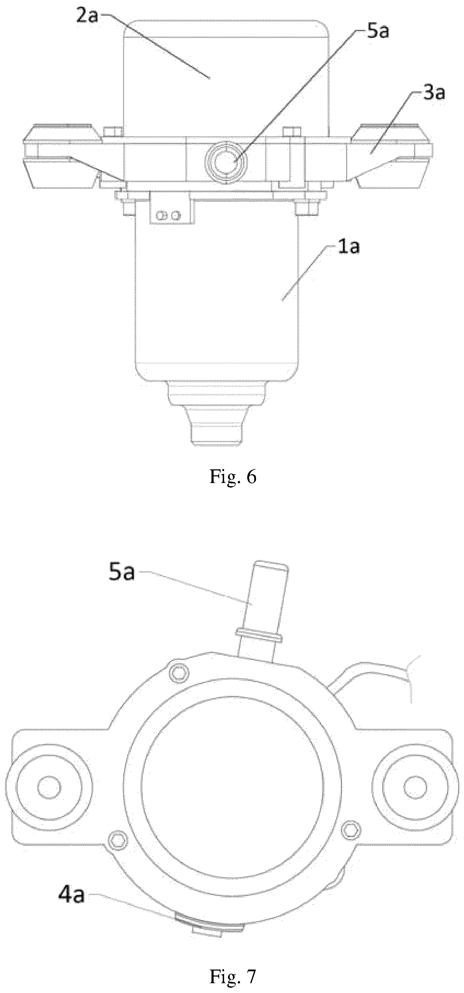

An exemplary structure of the vacuum pump according to the invention is shown in Figs. 5-7, where reference number 1a refers to a motor, 2a refers to a noise cover, 3a refers to a motor end cover, 4a refers to an exhaust port, and 5a an intake port. The motor (1a) drives the vacuum pump, with the motor housing head equipped with an intake port (5a) and exhaust port (4a) for air intake and exhaust respectively. The noise cover (2a) and motor end cover (3a) are joined to form a seal around the intake and exhaust ports via sealing rings, preventing air leakage and water ingress.

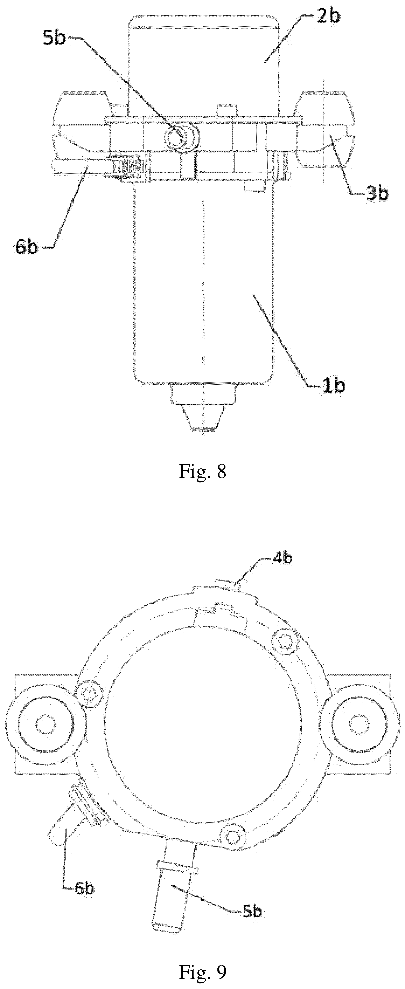

Another exemplary structure of the vacuum pump according to the present invention is shown in Figs. 8-9, where reference number 1b refers to a motor, 2b refers to a noise cover, 3b refers to a motor end cover, 4b refers to an exhaust port, 5b refers to an intake port, and 6b refers to a motor wiring harness. The wiring harness (6b) supplies power during vacuum pump operation. The motor (1b) drives the vacuum pump, with the motor housing head equipped with an intake port (5b) and exhaust port (4b) for air intake and exhaust respectively. The noise cover (2b) and motor end cover (3b) are joined to form a seal around the intake and exhaust ports via sealing rings, preventing air leakage and water ingress.

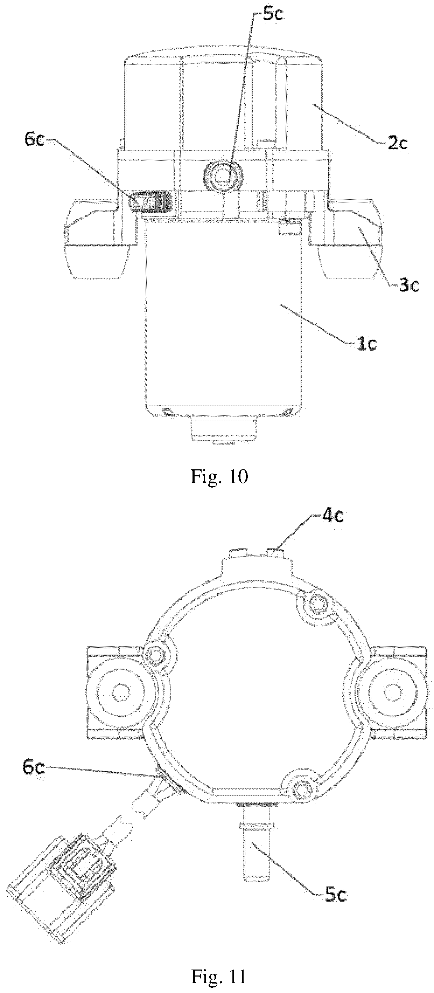

Another exemplary structure of the vacuum pump is shown in Figs. 10-11, where reference number 1c refers to a motor, 2c refers to a noise cover, 3c refers to a motor end cover, 4c refers to an exhaust port, 5c refers to an intake port, and 6c refers to a motor wiring terminal. The motor wiring terminal (6c) connects the wiring harness to the motor (1c), providing operational power. The motor (1c) drives the vacuum pump, with the motor housing head equipped with an intake port (5c) and exhaust port (4c) for air intake and exhaust respectively. The noise cover (2c) and the motor end cover (3c) are joined to form a seal around the intake and exhaust ports via sealing rings, preventing air leakage and water ingress.

The foregoing represents preferred embodiments of the present invention, which should not be construed as limiting the implementation methods or protection scope thereof. Those skilled in the art will recognize that all equivalent alternatives and obvious modifications derived from the specification and drawings shall fall within the protection scope of the present invention.

## Claims

1. A control method for a vacuum pump system, wherein the vacuum pump system is provided with a relative pressure sensor for detecting a real-time pressure difference between internal pressure of the vacuum pump system and external ambient pressure, comprising:
step A1: activating the vacuum pump to enter normal operation mode, and detecting whether the real-time pressure difference of the vacuum pump reaches a first activation pressure difference threshold within a first preset operating duration:
if not, proceed to step A2; if yes, proceed to step A3;
step A2: generating a warning signal for low vacuum fault and controlling the vacuum pump to enter fault mode;
step A3: controlling the vacuum pump to operate in a plain mode;
step A4: in the plain mode, determining whether plateau mode switching conditions are met based on the real-time pressure difference:
if not, continue step A3; if yes, proceed to step A5;
step A5: controlling the vacuum pump to operate in a plateau mode;
step A6: in the plateau mode, determining whether plain mode switching conditions are met based on the real-time pressure difference:
if not, continue step A5; if yes, proceed to step A3;
wherein, in the plain mode, the vacuum pump is set with a first activation pressure difference threshold and a first deactivation pressure difference threshold, and in the plateau mode, the vacuum pump is set with a second activation pressure difference threshold and a second deactivation pressure difference threshold, wherein the first activation pressure difference threshold is lower than the second activation pressure difference threshold.

2. The control method for a vacuum pump system of claim 1, wherein step A4 comprises:
step A41: determining whether the vacuum pump causes the real-time pressure difference to reach the first deactivation pressure difference threshold from the first activation pressure difference threshold within a second preset operating duration:
if yes, continue step A3; if not, proceed to step A42;
step A42: starting from the moment when the real-time pressure difference is at the first activation pressure difference threshold, controlling the vacuum pump to operate for the second preset operating duration and then stop, thereafter proceeding to step A43;
step A43: after the vacuum pump stops, determining whether the real-time pressure difference obtained within a first preset detection method is greater than the first activation pressure difference threshold:
if the real-time pressure difference is not greater than the first activation pressure difference threshold, proceed to step A5;
if the real-time pressure difference is greater than the first activation pressure difference threshold, proceed to step A44;
step A44: controlling the vacuum pump to start operating and, after the vacuum pump operates for a third preset operating duration, controlling the vacuum pump to stop, thereafter proceeding to step A45;
step A45: after the vacuum pump stops, determining whether the real-time pressure difference obtained within a second preset detection method is greater than the first activation pressure difference threshold:
if the real-time pressure difference is greater than the first activation pressure difference threshold, proceed to step A2;
if the real-time pressure difference is not greater than the first activation pressure difference threshold, proceed to step A3.

3. The control method for a vacuum pump system of claim 1, wherein step A6 comprises:
step A61: determining whether the vacuum pump causes the real-time pressure difference to reach the second deactivation pressure difference threshold from the second activation pressure difference threshold within a fourth preset operating duration:
if yes, proceed to step A62; if not, proceed to step A63;
step A62: determining whether the actual operating duration of the vacuum pump for the real-time pressure difference to reach the second deactivation pressure difference threshold from the second activation pressure difference threshold is less than a fifth preset operating duration:
if yes, proceed to step A3; if not, proceed to step A5;
step A63: starting from the moment when the real-time pressure difference is at the second activation pressure difference threshold, controlling the vacuum pump to operate for the fourth preset operating duration and then stop, thereafter proceeding to step A64;
step A64: after the vacuum pump stops, determining whether the real-time pressure difference obtained within a third preset detection method is greater than the second activation pressure difference threshold:
if the real-time pressure difference is not greater than the second activation pressure difference threshold, proceed to step A5;
if the real-time pressure difference is greater than the second activation pressure difference threshold, proceed to step A65;
step A65: controlling the vacuum pump to start operating and, after operating for a sixth preset operating duration, controlling the vacuum pump to stop, thereafter proceeding to step A66;
step A66: after the vacuum pump stops, determining whether the real-time pressure difference obtained within a fourth preset detection method is greater than the second activation pressure difference threshold:
if the real-time pressure difference is greater than the second activation pressure difference threshold, proceed to step A2;
if the real-time pressure difference is not greater than the second activation pressure difference threshold, proceed to step A5.

4. The control method for a vacuum pump system of claim 3, wherein in step A62, when the actual operating duration of the vacuum pump for the real-time pressure difference to reach the second deactivation pressure difference threshold from the second activation pressure difference threshold is not less than the fifth preset operating duration, detecting whether a vacuum leakage fault exists in the vacuum pump system at first:
if not, continue step A5; if yes, generate a warning signal for the vacuum leakage fault and continue step A5.

5. The control method for a vacuum pump system of claim 1, wherein in step A3, after the vacuum pump enters the plain mode, detecting whether the vacuum pump exhibits abnormalities, and upon detecting abnormalities, generating a warning signal for the vacuum pump failure and controlling the vacuum pump to enter fault mode; and/or
in step A5, after the vacuum pump enters the plateau mode, detecting whether the vacuum pump exhibits abnormalities, and upon detecting abnormalities, generating a warning signal for the vacuum pump failure and controlling the vacuum pump to enter fault mode.

6. The control method for a vacuum pump system of claim 1, wherein in step A3, after the vacuum pump enters the plain mode, detecting whether the relative pressure sensor exhibits abnormalities, and upon detecting abnormalities, generating a warning signal for the relative pressure sensor failure and controlling the vacuum pump to enter fault mode; and/or
in step A5, after the vacuum pump enters the plateau mode, detecting whether the relative pressure sensor exhibits abnormalities, and upon detecting abnormalities, generating a warning signal for the relative pressure sensor failure and controlling the vacuum pump to enter fault mode.

7. The control method for a vacuum pump system of claim 1, wherein in the fault mode, the vacuum pump is forced to perform a predetermined number of operating cycles, each operating cycle operates for a seventh preset duration followed by a first preset shutdown duration, if the corresponding fault is eliminated within the predetermined number of operating cycles, the vacuum pump returns to the normal operation mode of step A1; otherwise, the vacuum pump is deactivated.

8. The control method for a vacuum pump system of claim 2, wherein in step A41, when determining that the vacuum pump causes the real-time pressure difference to reach the first deactivation pressure difference threshold from the first activation pressure difference threshold within the second preset operating duration, detecting whether a vacuum leakage fault exists in the vacuum pump system at first:
if not, continue step A3; if yes, generate a warning signal for the vacuum leakage fault and continue step A3.

9. The control method for a vacuum pump system of claim 3, wherein in step A64, when determining that the real-time pressure difference is not greater than the second activation pressure difference threshold, detecting whether a vacuum leakage fault exists in the vacuum pump system at first:
if not, continue step A5; if yes, generate a warning signal for the vacuum leakage fault and continue step A5.

10. A vacuum pump system for implementing the control method of a vacuum pump system of one of claims 1-9, comprising:
a relative pressure sensor configured to detect a real-time pressure difference between internal pressure of the vacuum pump system and external ambient pressure;
a control module connected to both the relative pressure sensor and the vacuum pump, the control module is configured to:
after activating the vacuum pump, detect whether the real-time pressure difference of the vacuum pump reaches a first activation pressure difference threshold within a first preset operating duration, control the vacuum pump to operate in plain mode when the first activation pressure difference threshold is reached, or generate a warning signal for low vacuum fault and control the vacuum pump to enter fault mode when the first activation pressure difference threshold is not reached;
when the vacuum pump operates in the plain mode, switch the vacuum pump to operate in plateau mode upon determining plain mode switching conditions are met based on the real-time pressure difference;
when the vacuum pump operates in the plateau mode, switch the vacuum pump to operate in the plain mode upon determining plain mode switching conditions are met based on the real-time pressure difference;
wherein in the plain mode, the vacuum pump is configured with a first activation pressure difference threshold and a first deactivation pressure difference threshold, while in the plateau mode, the vacuum pump is configured with a second activation pressure difference threshold and a second deactivation pressure difference threshold, the first activation pressure difference threshold is lower than the second activation pressure difference threshold.
